# DEMANDE DE BREVET EUROPEEN

(11) **EP 2 842 829 A1**
(43) Date de publication de la demande: **04.03.2015**
(21) Numéro de dépôt: 13290206.5
(22) Date de dépôt: 30.08.2013
(51) Int. Cl.: B61L 15/00, B61L 27/00

(54) **Système de transmission de données entre un mobile et une infrastructure sol**

(71) Demandeur: Siemens S.A.S., 93527 Saint-Denis Cedex 2 (FR)
(72) Inventeur: Chazel, Anne-Sophie, 92350 Le Plessis-Robinson (FR); Alves, Clara Nogueira, 92130 Issy Les Moulineaux (FR)
(74) Mandataire: Maier, Daniel Oliver

(57) **Abrégé**

Système de transmission de données entre un mobile et une infrastructure sol.

La présente invention décrit un système de transmission de données pour permettre la transmission de données sous la forme d'au moins une onde électromagnétique entre une infrastructure sol et un mobile (2) assujetti à se déplacer sur une voie (1) de circulation équipée de ladite infrastructure sol, ledit système de transmission comprenant :
- au moins un dispositif de communication (21A, 21B) destiné à être embarqué à bord dudit mobile, ledit dispositif de communication comprenant au moins un émetteur/récepteur (21, 22) capable d'émettre/recevoir une onde électromagnétique;
- n dispositifs sols AP₁,...,APₙ, avec n ≥ 1, destinés à équiper ladite infrastructure sol, APᵢ désignant le i^{ème} dispositif sol, i = 1,...,n, lesdits dispositifs sols AP₁,...,APₙ étant destinés à être disposés successivement le long de ladite voie (1) de circulation, chaque dispositif sol APᵢ comprenant au moins un émetteur/récepteur (11, 12) capable d'émettre/recevoir une onde électromagnétique à une fréquence Fi ;
ledit système de transmission de données étant caractérisé en ce que
- chaque onde EM émise par l'émetteur/récepteur (11, 12) de chacun desdits dispositifs sol APᵢ est polarisée, la direction de polarisation de l'onde électromagnétique émise par un dispositif sol étant différente de la direction de polarisation de l'onde électromagnétique émise par le dispositif sol directement successif.

## Description

La présente invention concerne un système de transmission de données entre une infrastructure sol répartie le long d'une voie de circulation et un mobile assujetti à se déplacer sur ladite voie de circulation selon le préambule de la revendication 1.

La présente invention concerne de manière générale tout mobile configuré pour se déplacer, notamment de manière totale-ment automatisée, le long d'une voie de circulation équipée d'une infrastructure permettant l'échange de données entre chaque mobile et des dispositifs sol fixes gérés par exemple par un système de commande centralisée. En particulier, la présente invention s'adresse aux véhicules guidés, i.e. les moyens de transport en commun tels que des bus, trolleybus, tramways, métros, trains ou unités de train, etc., ainsi qu'aux moyens de transport de charge tel que, par exemple, les ponts roulants, pour lesquels l'aspect sécuritaire est très important et qui sont configurés pour se déplacer sur un réseau, i.e. ensemble de voies de circulation, et pour lesquels le guidage est assuré en particulier par au moins un rail disposé sur la voie de circulation.

L'échange de données entre un mobile circulant sur une voie de circulation et un ensemble de dispositifs sol disposés le long de ladite voie de circulation permet de transmettre des informations importantes liées par exemple à la sécurité du déplacement dudit mobile.

Afin de garantir l'acheminement de telles données sans qu'il y ait perte de données, les techniques actuelles sont basées sur la redondance de la couverture radio ou sur des techniques complexes de traitement de signal. Par exemple, EP 1 432 260 Bl décrit un système de transmission radioélectrique d'information entre une infrastructure et des mobiles, ledit système comprenant une double couverture radio de la voie de circulation de trains contrôlés automatiquement. Cette redondance permet de supporter une panne simple d'un équipement radio embarqué ou d'un équipement installé le long de la voie.

Malheureusement, la transmission de telles données ayant un impact sur la sécurité du déplacement dudit mobile requiert une grande disponibilité de canal radioélectrique afin d'assurer un contrôle du mobile. La tendance actuelle est d'utiliser des bandes radio licenciées afin d'éviter la cohabitation avec des données moins prioritaires que les données de contrôle/commande du mobile (par exemple un train de voyageurs). L'occupation du spectre électromagnétique croissant continuellement, il est devenu difficile d'obtenir de nouvelles licences pour émettre dans des bandes radio particulières. De plus, le coût associé à une telle licence est d'autant plus grand que la largeur de la bande radio est importante.

Un objectif principal de la présente invention est de diminuer les coûts liés aux systèmes de transmissions de données entre un mobile et des dispositifs sol sans impacter négativement sur la sécurité dudit mobile, et sans devoir diminuer le volume de données échangé. Un objectif secondaire est de palier à la saturation de l'occupation des bandes de fréquences utilisées pour le transfert desdites données.

Afin de parvenir à ces objectifs, un système est proposé par le contenu de la revendication 1.

Un ensemble de sous-revendications présente également des avantages de l'invention.

La présente invention se rapporte à un système de transmission de données pour permettre la transmission de données entre une infrastructure sol et un mobile assujetti à se déplacer sur une voie de circulation équipée de ladite infrastructure sol, ledit système de transmission comprenant :
- au moins un dispositif de communication embarqué à bord dudit mobile, ledit dispositif de communication comprenant au moins un émetteur/récepteur capable d'émettre/recevoir une onde électromagnétique (noté « onde EM » ci-après) configurée notamment pour servir de support auxdites données;
- n dispositifs sols AP₁,...,APₙ, avec n ≥ 1, destinés à coopérer avec ladite infrastructure sol, APᵢ désignant le i^{ème} dispositif sol, i = 1,...,n, lesdits dispositifs sols AP₁,...,APₙ étant disposés successivement le long de ladite voie de circulation, chaque dispositif sol APᵢ comprenant au moins un émetteur/récepteur capable d'émettre/recevoir un signal ou onde EM à une fréquence Fᵢ, ladite onde EM étant configurée notamment pour servir de support auxdites données, chaque dispositif sol APᵢ étant en particulier disposé le long de ladite voie de circulation et configuré de sorte que chaque point de ladite voie de circulation compris entre deux dispositifs sol successifs APⱼ et APⱼ₊₁, j allant de 1 à n-1, soit couvert par ladite onde EM de chaque émetteur/récepteur des dispositifs sols successifs APⱼ et AP_{j+1,} i.e. en d'autres termes, la distance séparant deux dispositifs sols successifs APⱼ et APⱼ₊₁ est inférieure ou égale à la portée de l'émetteur/récepteur du dispositif sol ayant la plus petite portée ;
   ledit système de transmission étant caractérisé en ce que
- chaque onde EM émise par l'émetteur/récepteur de chacun desdits dispositifs sol APᵢ est polarisée, en particulier linéairement ou circulairement ou elliptiquement, la direction de polarisation de l'onde EM émise par un dispositif sol étant différente de la direction de polarisation de l'onde EM émise par le dispositif sol directement successif, la direction de polarisation de l'onde EM émise par l'émetteur/récepteur du dispositif sol APⱼ étant croisée avec la direction de polarisation de l'onde EM émise par l'émetteur/récepteur du dispositif sol APⱼ₊₁.

En d'autres termes, la présente invention propose un croisement alternatif de la direction de polarisation de l'onde EM émise par les dispositifs sols successifs via leurs émetteurs/récepteurs respectifs. Pour rappel, la polarisation correspond à la direction et à l'amplitude du champ électrique E associé à une onde EM en fonction du temps. La direction de la polarisation de l'onde EM correspond à la direction du champ électrique E (exprimé vectoriellement) en fonction du temps. En cas de polarisation elliptique ou circulaire, une direction de polarisation d'une première onde EM sera dite « croisée » avec la direction de polarisation d'une seconde onde EM si la rotation du champ électrique E autour de son vecteur d'onde k se fait dans le sens de rotation des aiguilles d'une montre pour la première onde EM et dans le sens contraire de rotation des aiguilles de ladite montre pour la seconde, ou inversement. En d'autres termes, une direction de polarisation croisée pour des ondes EM polarisées elliptiquement ou circulairement fait référence à une polarisation, circulaire ou elliptique, droite ou gauche. Par exemple, une polarisation circulaire droite étant selon la présente invention alternativement croisée avec une polarisation circulaire gauche, ou bien, une polarisation elliptique droite étant alternativement croisée avec une polarisation elliptique gauche.

Préférentiellement, le système de transmission de données selon l'invention est caractérisé en ce que chaque dispositif sol APᵢ est disposé le long de ladite voie de circulation et est configuré de sorte que chaque point de ladite voie de circulation compris entre deux dispositifs sol successifs APₖ et APₖ₊₁, soit couvert par ladite onde électromagnétique rayonnée par chacun des dispositifs sols successifs APₖ₋₁, APₖ, APₖ₊₁. et APₖ₊₂, k allant de 2 à n-2. En d'autres termes, la disposition des dispositifs sol le long de la voie assure une couverture de chaque point de la voie par au moins quatre ondes EM émises par les quatre plus proches dispositifs sols.

En particulier, en considérant les ondes EM émises par les émetteurs/récepteurs des dispositifs sol APᵢ successifs, la polarisation des ondes EM émises par les émetteurs/récepteurs des dispositifs sol APᵢ avec i pair sont toutes orientées se-lon une première direction, et la polarisation des ondes EM émises par les émetteurs/récepteurs des dispositifs sol APᵢ avec i impair sont toutes orientées selon une seconde direction, la première direction étant différente de ladite seconde direction, préférentiellement, la première et la seconde direction étant orthogonale l'une à l'autre. En particulier, chaque émetteur/récepteur selon la présente invention comprend une antenne configurée pour rayonner, respectivement capter, une onde EM polarisée. Ainsi, chaque dispositif sol est préférentiellement capable de rayonner/capter via une antenne appropriée soit une onde EM polarisée selon la première direction, soit une onde EM polarisée selon la seconde direction. De même, le dispositif de communication embarqué à bord dudit mobile comprend en particulier au moins deux émetteurs/récepteurs pourvus chacun d'une antenne, un desdits émetteurs/récepteurs comprenant une antenne polarisée selon ladite première direction (i.e. l'émetteur/récepteur est capable de capter/rayonner une onde EM polarisée selon ladite première direction), l'autre desdits émetteurs/récepteurs comprenant une antenne polarisée selon la seconde direction (i.e. l'autre émetteur/récepteur est capable de capter/rayonner une onde EM polarisée selon la seconde direction). De cette façon, les dispositifs sol et le dispositif de communication embarqué sont capables de communiquer l'un avec l'autre via des ondes EM alternativement croisées. Préférentiellement, le système de transmission de données selon l'invention est caractérisé en ce que chaque dispositif de communication est configuré pour communiquer simultanément avec deux dispositifs sol successifs APⱼ, APⱼ₊₁, via par exemple chacun de ses émetteurs/récepteurs configurés pour se connecter simultanément et communiquer avec respectivement des dispositifs sols différents.

Avantageusement, la présente invention permet de diviser par deux la largeur de bande de fréquence radio nécessaire à une double couverture radio. En effet, deux dispositifs sol successifs APⱼ et APⱼ₊₁ peuvent en particulier émettre une onde EM à la même fréquence Fⱼ = Fⱼ₊₁, mais ayant une direction de polarisation différente l'une de l'autre de sorte que les directions de polarisations soient croisées, par exemple orthogonalement. Un autre avantage de la présente invention est qu'elle permet une utilisation de bandes de fréquences plus rapprochées que lorsque les ondes EM des dispositifs APᵢ successifs ne sont pas caractérisées par un croisement de leur direction de polarisation. En effet, comme la direction de polarisation des ondes EM émises par les dispositifs sols successifs sont croisées, ces dernières seront moins sensibles à des interférences dues à l'utilisation d'une fréquence voisine. Cela permettrait par exemple de diminuer la largeur de bande utilisée par des systèmes de transmissions de données préexistants. Avantageusement, plus le rapport entre l'intensité du signal transmis par une antenne, par exemple non polarisée ou respectivement polarisée selon une première direction, d'un émetteur/récepteur d'un dispositif de communication embarqué ou d'un dispositif sol et l'intensité du signal transmis par une autre antenne, polarisée orthogonalement ou respectivement polarisée selon une seconde direction, est important, meilleurs seront la sélectivité et le rapport signal sur bruit des signaux à traiter.

Le mobile selon la présente invention comprend préférentiellement deux extrémités, une extrémité avant et une extrémité arrière, les termes avant et arrière faisant référence à un sens de déplacement « en avant » dudit mobile d'un point amont vers un point aval. Plus particulièrement, ledit mobile est un véhicule de forme allongée, comprenant deux extrémités selon sa longueur, respectivement ladite extrémité avant et ladite extrémité arrière, ledit mobile étant configuré pour se déplacer selon une direction de déplacement sensiblement alignée avec sa longueur. Des exemples d'un tel mobile sont un train, un métro, un tram, ou encore un bus.

Préférentiellement, le système de transmission selon l'invention comprend, pour chaque mobile, deux dispositifs de communication embarqués à bord dudit mobile et comprenant chacun deux émetteurs/récepteurs pourvus chacun d'une antenne, un desdits émetteurs/récepteurs comprenant une antenne polarisée selon une première direction, et l'autre émetteur/récepteur comprenant une antenne polarisée selon une seconde direction. Il s'agit par exemple d'un premier dispositif de communication monté à l'extrémité avant dudit mobile et dont chaque émetteur/récepteur est configuré de façon à capter, respectivement rayonner, une onde EM provenant d'un point, respectivement vers un point, situé en aval dudit mobile le long de ladite voie de circulation, et un second dispositif de communication monté à l'extrémité arrière dudit mobile, et dont chaque émetteur/récepteur est configuré de façon à capter, respectivement rayonner, une onde EM provenant d'un point, respectivement vers un point, situé en amont dudit mobile le long de ladite voie de circulation. A cette fin, l'antenne dudit émetteur/récepteur du dispositif de communication situé à l'extrémité avant dudit mobile est en particulier dirigée de façon à rayonner, respectivement capter, ladite onde EM vers un point, respectivement provenant d'un point, situé en aval dudit mobile au voisinage de ladite voie de circulation, un dispositif sol étant par exemple positionné audit point en aval. Inversement, les antennes équipant les émetteurs/récepteur du dispositif de communication situé à l'extrémité arrière dudit mobile sont dirigées de façon à rayonner, respectivement capter, une onde EM vers un point, respectivement provenant d'un point, situé en amont dudit mobile.

Comme les dispositifs sol sont répartis le long de la voie de circulation dudit mobile de façon à ce que la distance séparant chacun des dispositifs sol APⱼ et APⱼ₊₁ est inférieure à la portée minimale desdits dispositifs sols APⱼ, APⱼ₊₁, il s'ensuit alors que chaque extrémité du mobile est en permanence en portée radio d'au moins un dispositif sol, soit au moyen d'un émetteur/récepteur dont l'antenne est polarisée selon la première direction, soit au moyen d'un émetteur/récepteur dont l'antenne est polarisée selon la seconde direction, ledit émetteur/récepteur appartenant au dispositif de communication situé à l'extrémité avant ou arrière dudit mobile. Avantageusement, comme les antennes des émetteurs/récepteur de chacun des dispositifs de communication situés à chacune des extrémités dudit mobile ont leur polarisation croisée, chaque émetteur/récepteur reçoit un maximum de signal en provenance de l'antenne d'un dispositif sol dont la polarisation est la même que son antenne.

Préférentiellement, le passage de main (ou handover) s'effectue en champ fort (i.e. lorsque l'intensité ou la puissance du champ EM dépasse une certaine valeur), dans une zone couverte par la portée de deux dispositifs sols. En particulier, les dispositifs de communication embarqués à bord dudit mobile effectuent successivement un changement de connexion avec les dispositifs sol successifs. Par exemple, lorsque ledit mobile circule entre un dispositif sol APⱼ₋₁ et un dispositif sol APⱼ, ce dernier étant situé en aval du dispositif sol APⱼ₋₁, le dispositif de communication situé à l'avant communique avec le dispositif sol APⱼ, tandis que le dispositif de communication situé à l'arrière communique avec le dispositif sol APⱼ₋₁. Préférentiellement, le dispositif de communication situé à l'avant dudit mobile coupe sa liaison avec le dispositif sol APⱼ lorsqu'il dépasse la position dudit dispositif sol APⱼ le long de la voie de circulation, la coupure étant par exemple automatiquement déclenchée par le dispositif de communication lorsque la force du signal provenant du dispositif sol APⱼ₊₁ est supérieure à un seuil prédéfini, une nouvelle liaison étant alors automatiquement établie avec le dispositif sol APⱼ₊₁. Préférentiellement, le dispositif de communication situé à l'arrière dudit mobile coupe sa liaison radio avec le dispositif sol APⱼ₋₁ dès que le signal devient inférieur à une autre valeur seuil prédéfinie, établissant dès lors automatiquement une nouvelle liaison avec le dispositif sol APⱼ, et ainsi de suite pour j allant de 2 à n-1.

Afin de mieux comprendre la présente invention, un exemple de réalisation et d'application est fourni à l'aide de:

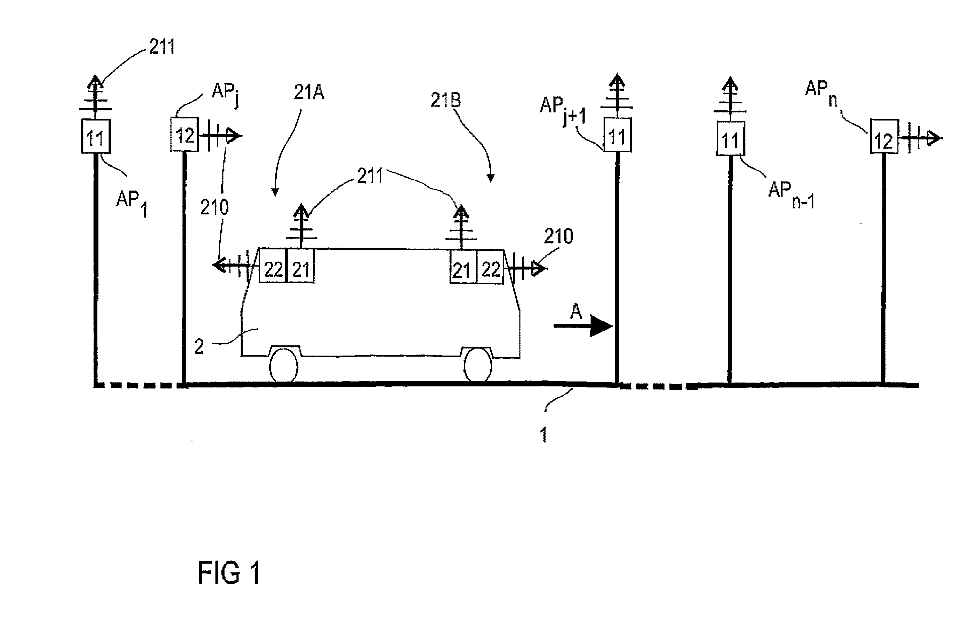

- Figure 1: exemple de réalisation d'un système de transmission de données selon l'invention;

La figure 1 présente schématiquement un système de transmission de données pour permettre la transmission de données sous forme d'ondes EM entre une infrastructure sol et un mobile 2 assujetti à se déplacer sur une voie 1 de circulation équipée de ladite infrastructure sol, ledit système de transmission comprenant :
- au moins un dispositif de communication 21A, 21B embarqué à bord dudit mobile 2, ledit dispositif de communication 21A, 21B comprenant au moins un émetteur/récepteur 21, 22 capable d'émettre/recevoir une onde EM;
- n dispositifs sols AP₁,...,APₙ, avec n ≥ 1, et APᵢ désignant le i^{ème} dispositif sol, i = 1,...,n, lesdits dispositifs sols AP₁,...,APₙ étant comptés et disposés successivement le long de ladite voie 1 de circulation, chaque dispositif sol APᵢ comprenant au moins un émetteur/récepteur 11, 12 capable d'émettre/recevoir un signal ou onde EM à une fréquence Fᵢ, chaque dispositif sol APᵢ étant disposé le long de ladite voie de circulation de sorte que chaque point de ladite voie de circulation compris entre deux dispositifs sol successifs APⱼ et APⱼ₊₁, j allant de 1 à n-1, soit couvert par la portée des émetteurs/récepteurs des deux dispositifs sols successifs APⱼ et APⱼ₊₁;
ledit système de transmission étant caractérisé en ce que chaque onde EM émise par l'émetteur/récepteur 11, 12 de chacun desdits dispositifs sol APᵢ est polarisée, en particulier linéairement, la direction de polarisation de l'onde EM émise par l'émetteur/récepteur 12 du dispositif sol APⱼ étant croisée, notamment orthogonalement, avec la direction de polarisation de l'onde EM émise par l'émetteur/récepteur 11 du dispositif sol APⱼ₊₁.

En particulier, la direction de polarisation de l'onde électromagnétique rayonnée par le dispositif sol APₖ soit identique à la direction de polarisation de l'onde électromagnétique rayonnée par le dispositif sol APₖ₊₂, et la direction de polarisation de l'onde électromagnétique rayonnée par le dispositif sol APₖ₋₁ soit identique à la direction de polarisation de l'onde électromagnétique du dispositif sol APₖ₊₁, mais différente (croisée) de la direction de polarisation de l'onde électromagnétique du dispositif sol APₖ, avec k=2,...,n-2. Préférentiellement, chaque dispositif sol APᵢ dont l'indice i est un nombre pair comprend un émetteur/récepteur 12 capable de capter/rayonner une onde EM polarisée selon une première direction, et chaque dispositif sol APᵢ dont l'indice i est un nombre impair comprend un émetteur/récepteur 11 capable de capter/rayonner une onde EM polarisée selon une seconde direction, la première direction de polarisation étant différente de la seconde direction de polarisation, en particulier, la première direction de polarisation étant orthogonale à la seconde direction de polarisation. A cette fin, l'émetteur/récepteur 11 de chacun desdits dispositifs sol APᵢ avec i impair comprend une antenne 211 polarisée selon ladite seconde direction, et l'émetteur/récepteur 12 de chacun desdits dispositifs sol APᵢ, avec i pair, comprend une antenne 210 polarisée selon ladite première direction.

Egalement, le système de transmission de données comprend notamment, destiné à être monté et, tel que représenté en Fig.1, monté à une extrémité avant dudit mobile 2 par rapport à son sens de déplacement indiqué par la flèche A (déplacement de amont vers aval), un premier dispositif de communication 21B, et, destiné à être monté et, tel que représenté en Fig.1, monté à une extrémité arrière dudit mobile 2 par rapport à son sens de déplacement, un second dispositif de communication 21A. Préférentiellement, le premier et le second dispositif de communication 21A, 21B comprennent chacun deux émetteurs/récepteurs 21, 22, respectivement un premier émetteur/récepteur 22 et un second émetteur/récepteur 21, capables de rayonner/capter une onde EM polarisée respectivement selon la première et seconde direction de polarisation. A cette fin, le premier émetteur/récepteur 22 et le second émetteur/récepteur 21 comprennent respectivement une antenne 210 polarisée selon la première direction de polarisation et une antenne 211 polarisée selon la seconde direction de polarisation afin de pouvoir coopérer avec les polarisations des ondes EM rayonnées par les dispositifs sol.

Selon un premier mode de réalisation préféré, lorsque ledit mobile est en déplacement entre les dispositifs sols APₖ et APₖ₊₁, le premier dispositif de communication 21B est configuré pour comparer les intensités des ondes électromagnétiques rayonnées par les dispositifs sols APₖ₊₁ et APₖ₊₂, et se connecter avec le dispositif sol APₖ₊₁ ou APₖ₊₂ pour lequel l'onde électromagnétique captée a la plus grande intensité, et le second dispositif de communication 21A est configuré pour comparer les intensités des ondes électromagnétiques rayonnées par les dispositifs sols APₖ₋₁ et APₖ, et se connecter avec le dispositif sol APₖ₋₁ ou APₖ pour lequel l'onde électromagnétique captée a la plus grande intensité. Avantageusement, en cas de panne d'un dispositif sol disposé en amont ou en aval dudit mobile, le dispositif de communication avant ou arrière dudit mobile sera ainsi en particulier apte à se connecter automatiquement à un autre dispositif sol rayonnant une onde EM dont l'intensité à l'emplacement dudit mobile est plus forte que l'onde EM rayonnée par le dispositif sol défectueux.

Selon un second mode de réalisation préféré, lorsque ledit mobile est en déplacement entre les dispositifs sols APₖ et APₖ₊₁, le premier dispositif de communication 21B est configuré pour se connecter avec chacun des dispositifs sols APₖ₊₁ et APₖ₊₂, de sorte que durant au moins un certain laps de temps, ledit premier dispositif de communication soit simultanément connecté aux dispositifs sols APₖ₊₁ et APₖ₊₂ (par exemple, le premier émetteur/récepteur dudit premier dispositif de communication est configuré pour se connecter au dispositif sol APₖ₊₁ et le second émetteur/récepteur dudit premier dispositif de communication est configuré pour se connecter simultanément au dispositif sol APₖ₊₂), et le second dispositif de communication 21A, est configuré pour se connecter avec chacun des dispositifs sols APₖ₋₁ et APₖ de sorte que durant au moins un certain laps de temps, ledit second dispositif de communication soit simultanément connecté aux dispositifs sols APₖ₋₁ et APₖ (par exemple, le premier émetteur/récepteur dudit second dispositif de communication est configuré pour se connecter au dispositif sol APₖ₋₁ et le second émetteur/récepteur dudit second dispositif de communication est configuré pour se connecter simultanément au dispositif sol APₖ₊₂).

Préférentiellement, le premier émetteur/récepteur 22 et le second émetteur/récepteur 21 du premier et du second dispositif de communication sont configurés pour communiquer successivement les mêmes données de sorte que chaque donnée soit communiquée successivement via les quatre connections disponibles pour le mobile avec les dispositifs sol via chacun desdits premiers et seconds émetteurs/récepteurs 21,22. De cette façon, il est possible d'assurer d'une manière simple la redondance de la transmission de données depuis le mobile vers des dispositifs sol.

Selon un autre mode de réalisation préféré, le premier émetteur/récepteur 22 et le second émetteur/récepteur 21 sont en particulier configurés pour former un système redondant. En d'autres termes, ils sont configurés pour envoyer les mêmes données au même moment respectivement à un dispositif sol APⱼ et à un dispositif sol APⱼ₊₁. Préférentiellement, les dispositifs de communication avant et arrière envoient des données différentes au même moment, ce qui permet avantageusement de doubler le débit de transmission de données vers les dispositifs sol.

De manière générale, chaque dispositif de communication est capable de gérer la connexion de ses émetteurs/récepteurs lors de l'entrée et de la sortie dudit mobile sur ladite voie de circulation comprenant lesdits dispositifs sol. Préférentiellement, chaque dispositif de communication est capable d'envoyer un message d'initialisation à un dispositif sol afin d'initier la communication et l'échange de données entre ledit dispositif sol et au moins un de ses émetteurs/récepteurs, ainsi qu'un message de fin de connexion afin de terminer l'échange de données avec ledit dispositif sol.

En résumé, la présente invention propose un système de transmission de données entre un dispositif de communication embarqué à bord d'un mobile et des dispositifs sols montés le long d'une voie de circulation parcourue par ledit mobile permettant de diminuer la largeur de bande nécessaire pour établir une liaison redondante entre le mobile et les dispositifs sols.

## Revendications

1. Système de transmission de données pour permettre la transmission de données sous la forme d'au moins une onde électromagnétique entre une infrastructure sol et un mobile (2) assujetti à se déplacer sur une voie (1) de circulation équipée de ladite infrastructure sol, ledit système de transmission comprenant :
- au moins un dispositif de communication (21A, 21B) destiné à être embarqué à bord dudit mobile (2), ledit dispositif de communication comprenant au moins un émetteur/récepteur (21, 22) capable d'émettre/recevoir une onde électromagnétique;
- n dispositifs sols AP₁,...,APₙ, avec n ≥ 1, destinés à équiper ladite infrastructure sol, APᵢ désignant le i^{ème} dispositif sol, i = 1,...,n, lesdits dispositifs sols AP₁,...,APₙ étant destinés à être disposés successivement le long de ladite voie (1) de circulation, chaque dispositif sol APᵢ comprenant au moins un émetteur/récepteur (11, 12) capable d'émettre/recevoir une onde électromagnétique à une fréquence Fᵢ ;
ledit système de transmission de données étant **caractérisé en ce que**
- chaque onde électromagnétique émise par l'émetteur/récepteur (11, 12) de chacun desdits dispositifs sol APᵢ est polarisée, la direction de polarisation de l'onde électromagnétique émise par l'émetteur/récepteur du dispositif sol APⱼ étant croisée avec la direction de polarisation de l'onde électromagnétique émise par l'émetteur/récepteur du dispositif sol APⱼ₊ᵢ, avec j allant de 1 à n-1.

2. Système de transmission de données selon la revendication 1, **caractérisé en ce que** chaque dispositif sol APᵢ est disposé le long de ladite voie (1) de circulation et est configuré de sorte que chaque point de ladite voie (1) de circulation compris entre deux dispositifs sol successifs APⱼ et APⱼ₊₁, soit couvert par ladite onde électromagnétique rayonnée par chacun des dispositifs sols successifs APⱼ et APⱼ₊₁.

3. Système de transmission de données selon une des revendications 1 ou 2, **caractérisé en ce que** chaque dispositif sol APᵢ est disposé le long de ladite voie (1) de circulation et est configuré de sorte que chaque point de ladite voie (1) de circulation compris entre deux dispositifs sol successifs APₖ et APₖ₊₁, soit couvert par ladite onde électromagnétique rayonnée par chacun des dispositifs sols successifs APₖ₋₁, APₖ, APₖ₊₁, et APₖ₊₂, k allant de 2 à n-2.

4. Système de transmission de données selon une des revendications 1 à 3, **caractérisé en ce que** la direction de polarisation de l'onde électromagnétique rayonnée par le dispositif sol APₖ soit identique à la direction de polarisation de l'onde électromagnétique rayonnée par le dispositif sol APₖ₊₂, et la direction de polarisation de l'onde électromagnétique rayonnée par le dispositif sol APₖ₋₁ soit identique à la direction de polarisation de l'onde électromagnétique du dispositif sol AP_{k+1,} mais différente de la direction de polarisation de l'onde électromagnétique du dispositif sol APₖ, avec k = 2,...,n-2.

5. Système de transmission de données selon une des revendications 1 à 4, **caractérisé en ce que** chaque dispositif sol APᵢ dont l'indice i est un nombre pair comprend un émetteur/récepteur (12) configuré pour capter/rayonner une onde électromagnétique polarisée selon une première direction, et chaque dispositif sol APᵢ dont l'indice i est un nombre impair comprend un émetteur/récepteur (11) configuré pour capter/rayonner une onde électromagnétique polarisée selon une seconde direction, la première direction de polarisation étant différente de la seconde direction de polarisation.

6. Système de transmission de données selon une des revendications 1 à 5, **caractérisé en ce que** chaque dispositif de communication (21A, 21B) est configuré pour communiquer simultanément avec deux dispositifs sol successifs APⱼ, APⱼ₊₁.

7. Système de transmission de données selon une des revendications 1 à 6, **caractérisé en ce qu'**il comprend un premier dispositif de communication (21B) configuré pour être monté à une extrémité avant dudit mobile (2) et un second dispositif de communication (21A) configuré pour être monté à une extrémité arrière dudit mobile (2).

8. Système de transmission de données selon la revendication 7, **caractérisé en ce que** le premier et le second dispositif de communication (21A, 21B) comprennent chacun deux émetteurs/récepteurs (21, 22), respectivement un premier émetteur/récepteur (22) et un second émetteur/récepteur (21), capables de rayonner/capter une onde électromagnétique polarisée selon la première, respectivement seconde, direction de polarisation.

9. Système de transmission de données selon la revendication 8, **caractérisé en ce que** le premier émetteur/récepteur (22) et le second émetteur/récepteur (21) comprennent respectivement une antenne (210) polarisée selon la première direction de polarisation et une antenne (211) polarisée selon la seconde direction de polarisation afin de pouvoir coopérer avec les polarisations des ondes électromagnétiques rayonnées par les dispositifs sol.

10. Système de transmission de données selon une des revendications 7 à 9, **caractérisé en ce que**, lorsque ledit mobile est en déplacement entre les dispositifs sols APₖ et APₖ₊₁, le premier dispositif de communication (21B) est configuré pour comparer les intensités des ondes électromagnétiques rayonnées par les dispositifs sols APₖ₊₁ et APₖ₊₂, et se connecter avec le dispositif sol APₖ₊₁ ou APₖ₊₂ pour lequel l'onde électromagnétique captée a la plus grande intensité, et le second dispositif de communication (21A) est configuré pour comparer les intensités des ondes électromagnétiques rayonnées par les dispositifs sols APₖ₋₁ et APₖ, et se connecter avec le dispositif sol APₖ₋₁ ou APₖ pour lequel l'onde électromagnétique captée a la plus grande intensité.

11. Système de transmission de données selon une des revendications 7 à 9, **caractérisé en ce que**, lorsque ledit mobile est en déplacement entre les dispositifs sols APₖ et APₖ₊₁, le premier dispositif de communication (21B) est configuré pour se connecter avec chacun des dispositifs sols APₖ₊₁ et APₖ₊₂ de sorte que durant au moins un certain laps de temps, ledit premier dispositif de communication soit simultanément connecté aux dispositifs sols APₖ₊₁ et APₖ₊₂, et le second dispositif de communication (21A) est configuré pour se connecter avec chacun des dispositifs sols APₖ₋₁ et APₖ de sorte que durant au moins un certain laps de temps, ledit second dispositif de communication soit simultanément connecté aux dispositifs sols APₖ₋₁ et APₖ.

12. Système de transmission de données selon la revendication 11, **caractérisé en ce que** le premier émetteur/récepteur (22) et le second émetteur/récepteur (21) du premier et du second dispositif de communication sont configurés pour communiquer successivement les mêmes données de sorte que chaque donnée soit communiquée successivement via les quatre connections disponibles pour le mobile avec les dispositifs sol via chacun desdits premiers et seconds émetteurs/récepteurs (21,22).

13. Système de transmission de données selon la revendication 11, **caractérisé en ce que** le premier émetteur/récepteur (22) et le second émetteur/récepteur (21) sont configurés pour envoyer les mêmes données au même moment respectivement à un dispositif sol APⱼ et à un dispositif sol APⱼ₊₁.
